# EUROPEAN PATENT APPLICATION

(11) **EP 2 698 893 A1**
(43) Date of publication of application: **19.02.2014**
(21) Application number: 12771992.0
(22) Date of filing: 13.04.2012
(51) Int. Cl.: H02J 3/00, H02J 13/00

(54) **SYSTEM SIDE CONTROL DEVICE AND METHOD**

(30) Priority: 14.04.2011 JP 2011090524
(71) Applicant: Kyocera Corporation, Kyoto 612-8501 (JP)
(72) Inventor: NAKAYAMA, Taku, Kyoto 612-8501 (JP)
(74) Representative: Schwabe - Sandmair - Marx
(86) International application number: PCT/JP2012/060185
(87) International publication number: WO 2012/141315

(57) **Abstract**

In a power control system provided with a consumer controller that controls an operation of a load equipment provided in a consumer, a system-side controller communicates with the consumer controller. The system-side controller comprises: a storage unit that associates device identification information, an operation parameter, operating environment information, and a power consumption with one another and stores them; a reception unit that receives, from the consumer controller, power consumption request information including the device identification information of the load equipment provided in the consumer and the operating environment information; a control unit that extracts the operation parameter and the power consumption from the storage unit on the basis of the device identification information and the operating environment information included in the power consumption request information; and a transmission unit that transmits an extraction result by the control unit to the consumer controller.

## Description

### Technical Field

The present invention relates to a system-side controller that communicates with a consumer controller in a power control system provided with the consumer controller that controls an operation of a load equipment provided in a consumer, and a method of communicating with the same.

### Background Art

Heretofore, the demand for energy conservation has increased not only in the society and the enterprises, but also among consumers such as an ordinary family. In the midst of these movements, it is being introduced a consumer controller that is called HEMS (Home Energy Management System) for collectively managing a distributed power source such as a photovoltaic cell installed at home or a power consumption of a load equipment such as a household electrical appliance (see PTL 1, for example).

Furthermore, in recent years, a power control system using "Smart grid technology" is drawing attention, so as to efficiently control the power supplied from an electric power system to a consumer by employing information and communication technology.

Such a power control system is configured by the above-described consumer controller and a system-side controller installed at the power system side. In the power control system, the consumer controller is capable of performing power control on the load equipment provided in the consumer, according to control information related to a power demand from the system-side controller.

For example, when the power demand is at peak, if the system-side controller notifies the consumer controller of an increase in power demand, then the consumer controller is capable of controlling the power consumption of the load equipment provided in the consumer, taking into consideration the power demand. Therefore, it is possible to efficiently control the power supplied from the power system to the consumer.

### Citation List

### Patent Literature

PTL 1: Japanese Patent Application Publication No. 2009-259125

### Summary of the Invention

In the meantime, in the above-described power control system, when the consumer controller provided in the consumer controls the operation of the load equipment, the consumer controller executes the control on the basis of an operation parameter for determining an operation status of the load equipment. A large number of operation parameters are often provided in the load equipment. For example, when an air-conditioning system such as an air-conditioner is adopted as an example, there are many operation parameters such as a temperature, a humidity, an air volume, and a wind direction.

In addition, in order for the consumer controller to appropriately execute the power control in the consumer, it is necessary to understand in advance the power consumption obtained when the load equipment is operated on the basis of each operation parameter. Various operating environments affect the power consumption obtained when the load equipment is operated. For example, in the air conditioner, the power consumption obtained when the load equipment is operated may differ depending on an area of a room where the air conditioner is installed or an operating environment such as a building material of a room floor (for example, a wooden floor or carpet).

As described above, in order for the consumer controller to appropriately control the power consumption of the load equipment, it is desired to retain in advance many operation parameters and the power consumption corresponding to various operating environments. However, there is a problem that when many operation parameters and the power consumptions are thus retained in advance in the consumer controller, the scale of the consumer controller in enlarged.

Therefore, the present invention has been achieved in order to solve the above-described problem, and an object thereof is to provide a system-side controller and a method with which it is possible to appropriately control a power consumption of a load equipment without enlarging the device scale of a consumer controller, in a power control system that includes the consumer controller that controls power in a consumer.

In order to solve the above-described problem, the present invention has following features. First, a system-side controller according to the present invention is summarized as follows. In a power control system (power control system 1) provided with a consumer controller (consumer controller 190) that controls an operation of a load equipment (e.g., air conditioner) provided in a consumer, a system-side controller (system-side controller 200) that communicates with the consumer controller, comprises: a storage unit (storage unit 220) that associates device identification information for identifying the load equipment, an operation parameter (e.g., temperature value) for determining an operating status of the load equipment, operating environment information (e.g., area of a room in which the load equipment is installed) indicating an operating environment of the load equipment, and a power consumption corresponding to the operating environment of the load equipment with one another and stores them; a reception unit (reception unit 211) that receives, from the consumer controller, power consumption request information including the device identification information of the load equipment provided in the consumer and the operating environment information indicating the operating environment of the load equipment; a control unit (extraction unit 231) that extracts the operation parameter and the power consumption from the storage unit on the basis of the device identification information and the operating environment information included in the power consumption request information; and a transmission unit (transmission unit 212) that transmits an extraction result by the control unit to the consumer controller.

The second feature of the system-side controller according to the above-described feature of the present invention is summarized as follows. In the storage unit, at least one of a predetermined power consumption calculated on the basis of a design value and an actually measured power consumption is stored as the power consumption, and the control unit determines, when the power consumption request information is received, whether or not the measured power consumption associated with the operating environment information included in the power consumption request information is stored in the storage unit, extracts the measured power consumption, upon determination that the measured power consumption is stored, and extracts the predetermined power consumption, upon determination that the measured power consumption is not stored.

The third feature of the system-side controller according to the above-described feature of the present invention is summarized as follows. The control unit determines, when the reception unit receives power consumption request information including new operating environment information not stored in the storage unit, that the measured power consumption is not stored, and extracts the predetermined power consumption, and associates the device identification information, the operation parameter, the new operating environment information, and the predetermined power consumption with one another, and stores them in the storage unit.

The fourth feature of the system-side controller according to the above-described feature of the present invention is summarized as follows. The control unit controls the transmission unit, upon determination that the measured power consumption is not stored, such that the transmission unit transmits instruction information for instructing a measurement report on the measured power consumption, to the consumer controller.

The fifth feature of the system-side controller according to the above-described feature of the present invention is summarized as follows. The storage unit stores the operating environment information and the power consumption, for each operation mode associated with operation parameter, for each load equipment provided in the consumer, and the control unit extracts the operation parameter and the power consumption from the storage unit for each operation mode on the basis of the device identification information and the operating environment information included in the power consumption request information, and controls the transmission unit such that the transmission unit transmits an extraction result to the consumer controller.

The sixth feature of the system-side controller according to the above-described feature of the present invention is summarized as follows. The control unit controls the transmission unit such that the transmission unit periodically transmits instruction information for instructing a measurement report on the measured power consumption, to the consumer controller, so as to periodically update the measured power consumption stored in the storage unit on the basis of the report from the consumer controller.

The seventh feature of the system-side controller according to the above-described feature of the present invention is summarized as follows. When the operation parameter and/or the power consumption associated with the device identification information and the operating environment information included in the power consumption request information is not stored in the storage unit, the control unit acquires the operation parameter and/or the power consumption power consumption from a server via a wide area network.

The eighth feature of the system-side controller according to the above-described feature of the present invention is summarized as follows. When the power consumption associated with the device identification information and the operating environment information included in the power consumption request information is not stored in the storage unit, the control unit extracts a power consumption associated with the operating environment information from among power consumptions associated with another load equipment determined to be similar to the load equipment indicated by the device identification information, and controls the transmission unit such that the transmission unit transmits an extraction result to the consumer controller.

The ninth feature of the system-side controller according to the above-described feature of the present invention is summarized as follows. When the power consumption associated with the device identification information and the operating environment information included in the power consumption request information is not stored in the storage unit, the control unit extracts a power consumption associated with another operating environment determined to be similar to the operating environment indicated by the operating environment information, from among power consumptions associated with the load equipment indicated by the device identification information, and controls the transmission unit such that the transmission unit transmits an extraction results to the consumer controller.

The tenth feature of the system-side controller according to the above-described feature of the present invention is summarized as follows. The control unit transmits information indicating a accuracy of a power consumption included in an extraction result, to the consumer controller, at the time of transmitting the extraction result to the consumer controller.

The feature of a method according to the present invention is summarized as follows. In a power control system provided with a consumer controller that controls an operation of a load equipment provided in a consumer, a method of communicating with the consumer controller, comprises: a storage step of associating device identification information for identifying the load equipment, an operation parameter for determining an operating status of the load equipment, operating environment information indicating an operating environment of the load equipment, and a power consumption corresponding to the operating environment of the load equipment with one another and storing them; a reception step of receiving, from the consumer controller, power consumption request information including the device identification information of the load equipment provided in the consumer and the operating environment information indicating the operating environment of the load equipment; an extraction step of extracting the operation parameter and the power consumption from the stored content in the storage step on the basis of the device identification information and the operating environment information included in the power consumption request information; and a transmission step of transmitting an extraction result in the extraction step to the consumer controller.

### Brief Description of the Drawings

[Fig. 1] Fig. 1 is an outline view of the configuration of a power control system according to the embodiment of the present invention.
[Fig. 2] Fig. 2 is an outline view of the configuration of a consumer control system according to the embodiment of the present invention.
[Fig. 3] Fig. 3 is a block diagram showing the configuration of the system-side controller according to the embodiment of the present invention.
[Fig. 4] Fig. 4 is a diagram showing an example of a table stored in the storage unit of the system-side controller according to the embodiment of the present invention.
[Fig. 5] Fig. 5 is a sequence diagram showing the operation of the power control system according to the embodiment of the present invention.
[Fig. 6] Fig. 6 is a sequence diagram showing the operation of the system-side controller according to the embodiment of the present invention.
[Fig. 7] Fig. 7 is a diagram showing an example of a table stored in the storage unit of the system-side controller according to the embodiment of the present invention.
[Fig. 8] Fig. 8 is a sequence diagram showing the operation of the power control system according to the first modification of the present invention.
[Fig. 9] Fig. 9 is a diagram showing an example of a table stored in the storage unit of the system-side controller according to the first modification of the present invention.

### Description of the Embodiment

Next, with reference to the drawings, the embodiment of the present invention will be described. Specifically, the description will be given in order of (1) Configuration of Power Control System, (2) Configuration of Consumer Control System, (3) Configuration of System-side Control System, (4) Operation of Power Control System, (5) Operation and Effect, (6) First Modification, (7) Second Modification and (8) Other Embodiments. Note that in the drawings of the following embodiments, the same or similar reference signs are applied to the same or similar portions.

### (1) Configuration of Power Control System

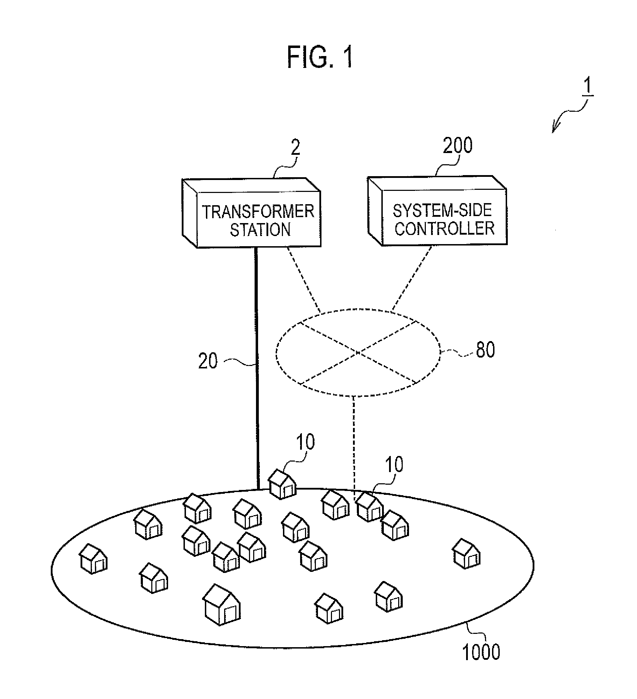

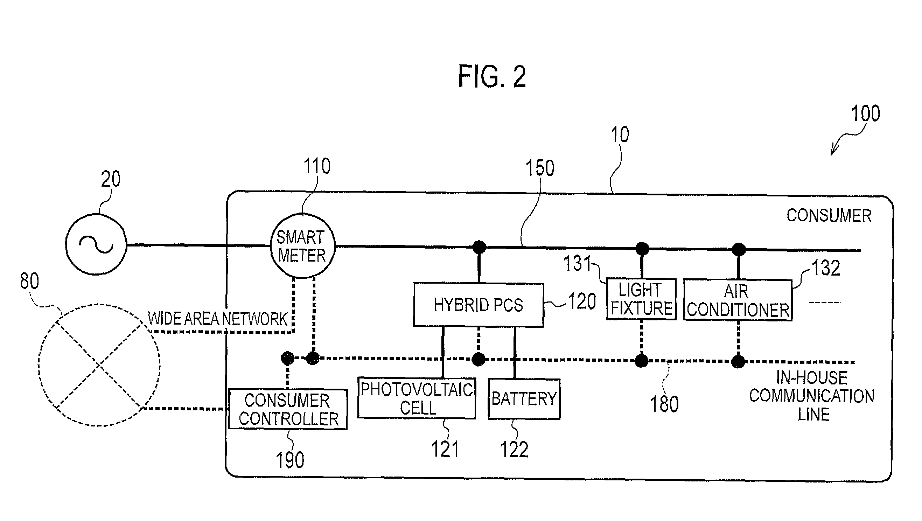

Fig. 1 is an outline view of the configuration of a power control system 1 according to the present embodiment. The power control system 1 is capable of controlling the power supplied to each consumer 10, such as an ordinary family, which configures a consumer group 1000. The power control system 1 is provided with a consumer controller 190 (see Fig. 2) that controls an operation of a load equipment installed in each consumer 10; a system-side controller 200; and a power system 20 that includes a transformer station 2.

Furthermore, the consumer controller 190, the system-side controller 200, and the transformer station 2 communicate via a wide area network 80. The system-side controller 200 is configured to manage the consumer controller installed in each consumer. The system-side controller 200 is capable of instructing the consumer controller 190, for example, to perform power control via the wide area network 80. It should be noted that the system-side controller 200 is considered to be a device called CEMS (Community Energy Management System).

### (2) Configuration of Consumer Control System

Fig. 2 is an outline view of the configuration of a consumer control system 100 according to the present embodiment. The consumer control system 100 is provided in the consumer 10 such as an ordinary family, and is capable of performing power control on a device in the consumer 10.

As shown in Fig. 2, the consumer control system 100 includes: a smart meter 110, a hybrid power conditioner (PCS) 120, a photovoltaic cell 121, a battery 122, a load equipment (a light fixture 131 and an air conditioner 132), and the consumer controller 190. The consumer control system 100 may include a battery installed in an electric car, for example.

The smart meter 110 measures a total power consumption that is a sum of power consumed by the load equipment in the consumer control system 100. The smart meter 110 is capable of notifying the system-side controller 200 of the measured total power consumption via the wide area network 80.

The hybrid PCS 120 is connected to a domestic distribution cable 150, and connected to the photovoltaic cell 121, used as a distributed power source, and the battery 122. The hybrid PCS 120 runs the photovoltaic cell 121 and the battery 122, according to control of the consumer controller 190.

The hybrid PCS 120 is capable of allowing the battery 122 to store the power generated by the photovoltaic cell 121. The hybrid PCS 120 is capable of converting AC power supplied from the domestic distribution cable 150 to DC power, and is capable of allowing the battery 122 to store the DC power.

The hybrid PCS 120 is capable of converting the DC power discharged from the battery 122 or the DC power generated by the photovoltaic cell 121, to the AC power to be sent out to the domestic distribution cable 150. The AC power sent out to the domestic distribution cable 150 is used, as needed, for the light fixture 131 and in the air conditioner 132, or serves as a backfed power to the power system 20.

The light fixture 131 and the air conditioner 132 that configure the load equipment group are connected to the domestic distribution cable 150 and to an in-house communication line 180. It is noted that the load equipment group is operated according to the control of the consumer controller 190. Furthermore, as a load equipment, a refrigerator, a heat accumulator and the like may be installed additionally.

The consumer controller 190 is provided in the consumer 10, and performs power control on each device in the consumer 10. The consumer controller 190 communicates with the smart meter 110, the hybrid PCS 120, the light fixture 131, and the air conditioner 132, via the in-house communication line 180.

Furthermore, the consumer controller 190 communicates with the system-side controller 200 that controls the power supplied to the consumer group 1000 that includes the consumer 10, via the wide area network 80. The consumer controller 190 is capable of receiving control information including a power rate, for example, of the power of the power system 20, from the system-side controller 200, and on the basis of the control information, the consumer controller 190 is capable of controlling the operation of the load equipment.

Furthermore, the consumer controller 190 associates an operation mode, an operation parameter for determining the operation status of the load equipment depending upon the operation mode, and power consumption obtained when the load equipment is operated by the operation parameter with one another and stores them. Furthermore, information of each of the operation mode, the operation parameter and the power consumption will be described in detail later. Furthermore, the consumer controller 190 is capable of acquiring these items of information from the system-side controller 200.

Furthermore, upon receipt of instruction information for instructing measurement of the power consumption of the load equipment, from the system-side controller 200, the consumer controller 190 is capable also of measuring the power consumption of the load equipment in response thereto. The consumer controller 190 is also capable of reporting the measured power consumption to be included in the measurement information, to the system-side controller 200.

### (3) Configuration of System-side Controller

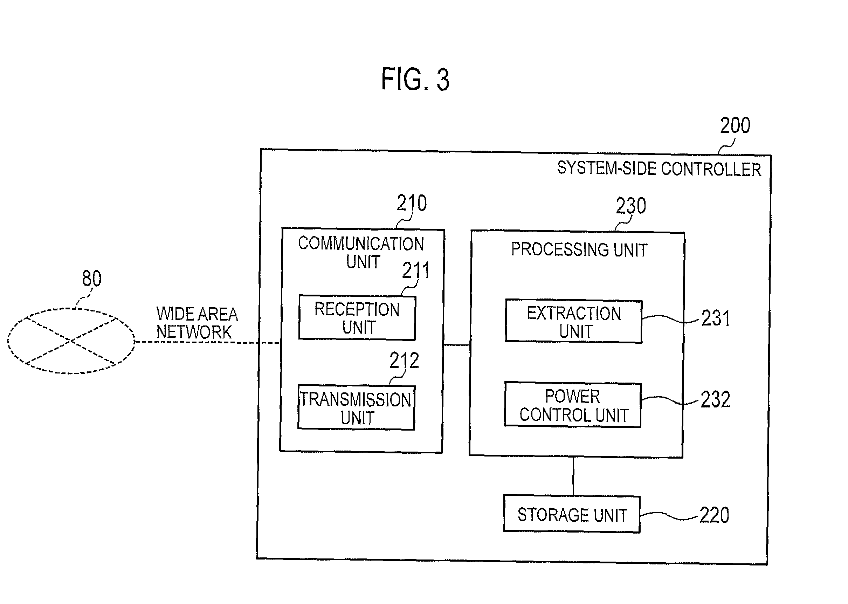

The configuration of the system-side controller 200 is described with reference to Fig. 3. Fig. 3 is a block diagram showing the configuration of the system-side controller 200. Specifically, as shown in Fig. 3, the system-side controller 200 is provided with a communication unit 210 that connects to the wide area network 80, a storage unit 220, and a processing unit 230.

The communication unit 210 communicates with the consumer controller 190, for example, via the wide area network 80. Furthermore, the communication unit 210 is provided with a reception unit 211 and a transmission unit 212.

The reception unit 211 receives various types of information transmitted from the consumer controller 190. The reception unit 211 according to the present embodiment receives power consumption request information for requesting the power consumption of the load equipment, from the consumer controller 190. The power consumption request information includes device identification information for the load equipment provided in the consumer 10 and operating environment information of the load equipment. It is noted that the power consumption request information may include not only device identification information and operating environment information, but also an operation mode and/or an operation parameter. Furthermore, the reception unit 211 outputs the received power consumption request information, to the processing unit 230.

The transmission unit 212 transmits various types of information output from the processing unit 230, to the consumer controller 190.

The storage unit 220 stores a program executed by the processing unit 230, and is used as a work area during the program execution by the processing unit 230.

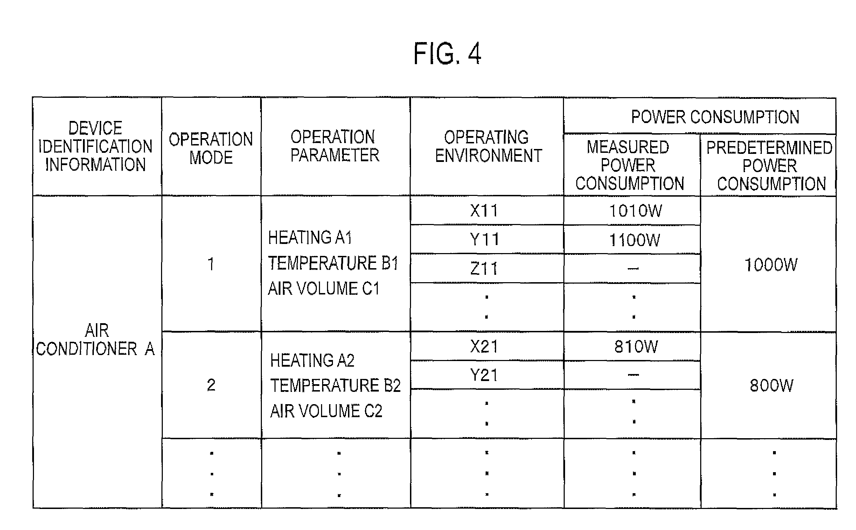

The storage unit 220 according to the present embodiment associates the device identification information for identifying the load equipment provided in the consumer 10, the operation parameter for determining the operation status of the load equipment, the operating environment information showing the operating environment of the load equipment, and the power consumption of the load equipment with one another and stores them. Specifically, as shown in Fig. 4, the storage unit 220 stores an information table storing the device identification information, the operation mode, the operation parameter, the operating environment information, and the power consumption which are associated with one another.

In this case, the device identification information is information for identifying the load equipment. In an example shown in Fig. 4, "Air conditioner A" is shown to identify the air conditioner. Examples of the device identification information may include a type, a model, a manufacturing number, and a manufacturing year of the load equipment.

The operation mode is information for managing the operation status of the load equipment defined according to the magnitude of the power consumption of the load equipment. The consumer controller 190 provided in the consumer 10 controls the operation of the load equipment on the basis of a predetermined number of operation modes (for example, five operation modes 1 to 5), and the operation parameters associated with the respective operation modes. Furthermore, the operation modes 1 to 5 are set such that the operation mode of the larger the number shows the smaller the power consumption when the load equipment is operated. The operation parameters associated with the respective operation modes 1 to 5 are different.

The operation parameter is information for determining the operation status of the load equipment. For example, when the air conditioner is adopted as an example, the operation parameter is the information for determining the operation status such as heating/cooling/ventilation operation, temperature, and air volume. Fig. 4 shows an example such as "Heating A1" showing a heating operation, "Temperature B1" showing a temperature value, and "Air volume C1" showing a rate of air-flow.

The operating environment information is information related to the environment of the consumer 10 in which the load equipment is installed. For example, the operating environment information is information showing the area of a room where the air conditioner is installed, a building material (for example, wooden structure or concrete) of a room wall, and a building material (for example, wooden floor or carpet) of a room-floor. The operating environment information is set by the input by a user at the time of installing the consumer controller 190 in the consumer 10. It is noted that the operating environment information may be information showing a region, such as a cold district, a warm district, Hokkaido, or Okinawa, for example. Alternatively, the operating environment information may be information showing various conditions that affect the power consumption when the load equipment is operated.

The power consumption is information showing a value of the power consumption consumed when the load equipment identified by the device identification information is operated on the basis of the operation parameter and the operating environment information. Furthermore, as shown in Fig. 4, in the storage unit 220 according to the present embodiment, at least one of a predetermined power consumption calculated on the basis of a design value and an measured power consumption is stored as the power consumption.

The predetermined power consumption is a value obtained by calculating the power consumption of the load equipment operated on the basis of the operation parameter and the operating environment information, on the basis of the design value.

The measured power consumption is a value obtained by actually measuring the power consumption of the load equipment, in the consumer 10, operated on the basis of the operation parameter and the operating environment information. Specifically, the measured power consumption is a power consumption value measured by the consumer controller in the consumer in the same operating environment as shown in the operating environment information, when the load equipment is operated on the basis of the same operation parameter. The measured power consumption, which is an actually measured value, is a power consumption value having higher accuracy than the predetermined power consumption.

The processing unit 230 performs a process according to a program stored in the storage unit 220. Furthermore, the processing unit 230 is provided with an extraction unit 231 and a power control unit 232.

When the power consumption request information is received by the reception unit 211, the extraction unit 231 extracts the operation parameter and the power consumption from the storage unit 220, on the basis of the device identification information and the operating environment information included in the power consumption request information.

Specifically, when the power consumption request information is received by the reception unit 211, the extraction unit 231 acquires the device identification information and the operating environment information included in the power consumption request information. Furthermore, with reference to the information table of the storage unit 220, the extraction unit 231 specifies a record that corresponds to the device identification information. In the specified record, the extraction unit 231 extracts the operation mode and the operation parameters associated with the device identification information.

Subsequently, the extraction unit 231 determines whether or not the measured power consumption associated with the operating environment information included in the power consumption request information is stored in the storage unit 220. Upon determination that the measured power consumption is stored, the extraction unit 231 extracts the measured power consumption.

For example, as shown in Fig. 4, when the operating environment information included in the power consumption request information is "X11", the extraction unit 231 determines that the measured power consumption "1010W" associated with the operating environment information "X11" is stored, and extracts the measured power consumption "1010W".

On the other hand, upon determination that the measured power consumption is not stored, the extraction unit 231 extracts the predetermined power consumption. For example, as shown in Fig. 4, when the operating environment information is "Z11" the extraction unit 231 determines that the measured power consumption associated with the operating environment information "Z11" is not stored, and extracts the predetermined power consumption "1000W".

It is noted that upon determination that the operating environment information included in the power consumption request information is not stored in the storage unit 220, the extraction unit 231 determines that a new operating environment information is received, and associates the device identification information, the operation parameters, the new operating environment information, and the predetermined power consumption with one another, and stores in the storage unit 220. Furthermore, in this case, the extraction unit 231 determines that the measured power consumption is not stored, and extracts the predetermined power consumption.

Furthermore, the extraction unit 231 may extract the power consumption (the measured power consumption or the predetermined power consumption) corresponding to the device identification information and the operating environment information included in the power consumption request information, for each of a plurality of operation modes.

The power control unit 232 transmits an extraction result obtained from the extraction unit 231 to the consumer controller 190, via the transmission unit 212. Specifically, the power control unit 232 transmits the power consumption response information including the operation mode, the operation parameter corresponding to the operation mode, the measured power consumption or the predetermined power consumption, to the consumer controller 190. When the extraction unit 231 extracts the power consumption (the measured power consumption or the predetermined power consumption) for each of a plurality of operation modes, the power control unit 232 transmits the power consumption response information including the plurality of operation modes, the operation parameters for each of the plurality of operation modes, the power consumption (the measured power consumption or the predetermined power consumption) for each of the plurality of operation modes, to the consumer controller 190. As a result, the consumer controller 190 becomes capable of possessing a plurality of sets of operation parameters and the power consumptions, thereby performing the appropriate control out of a plurality of options.

### (4) Operation of power control system

### (4-1) Operation outline of power control system

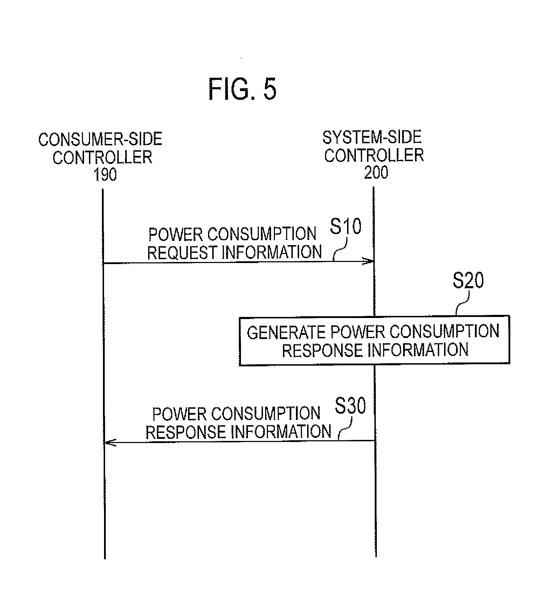

Next, the operation of the power control system 1 is described. Fig. 5 is a sequence diagram showing the operation of the power control system 1. In this case, Fig. 5 shows an operation when the power consumption request information for requesting the power consumption is transmitted from the consumer controller 190 provided in the consumer 10.

In step S10, the consumer controller 190 transmits the device identification information of the load equipment provided in the consumer 10 and the power consumption request information including the operating environment information of the load equipment, to the system-side controller 200.

In step S20, upon receipt of the power consumption request information, the system-side controller 200 acquires the device identification information and the operating environment information from the power consumption request information. The system-side controller 200 extracts the operation mode, the operation parameter corresponding to the operation mode, the measured power consumption or the predetermined power consumption from the storage unit 220, on the basis of the acquired device identification information and operating environment information, and generates the power consumption response information including these items of information.

In step S30, the system-side controller 200 transmits the generated power consumption response information to the consumer controller 190.

In this way, the system-side controller 200 transmits various types of information used for controlling the operation of the load equipment to the consumer controller 190.

### (4-2) Operation of system-side controller

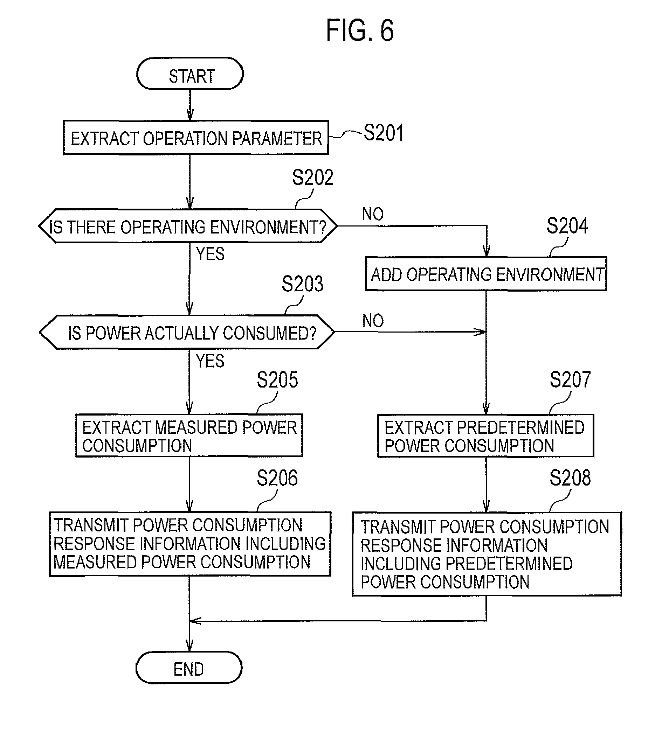

Next, with reference to Fig. 6, the operation of the system-side controller 200 in the above-described step S20 is specifically described. Fig. 6 is a sequence diagram showing the operation of the system-side controller 200.

Firstly, in step S201, in the system-side controller 200, the reception unit 211 receives the power consumption request information. Furthermore, when the reception unit 211 receives the power consumption request information, the extraction unit 231 acquires the device identification information and the operating environment information included in the power consumption request information. The extraction unit 231 extracts the operation modes 1 to 5 associated with the device identification information and the operation parameters corresponding to the operation modes 1 to 5, with reference to the information table of the storage unit 220.

In step S202, the extraction unit 231 determines whether or not the operating environment information acquired from the power consumption request information is stored to be associated with the device identification information, in the storage unit 220.

In step S203, upon determination that the operating environment information is stored in the storage unit 220, then the extraction unit 231 determines whether or not the measured power consumption associated with the operating environment information included in the power consumption request information is stored in the storage unit 220.

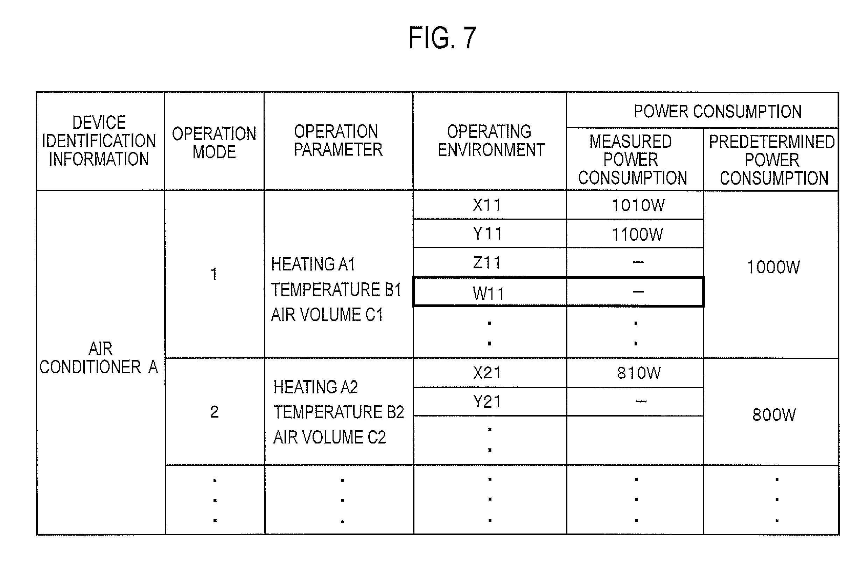

On the other hand, in step S204, upon determination that the operating environment information is not stored in the storage unit 220, the extraction unit 231 determines that the new operating environment information is included in the power consumption request information. The extraction unit 231 associates the device identification information, the operation parameter, the new operating environment information, and the predetermined power consumption with one another, and stores them on the information table. For example, when the new operating environment information is considered to be "W11", the extraction unit 231 newly sets and stores the operating environment information "W11" as shown in Fig. 7.

In step S205, upon determination that the measured power consumption is stored at the time of the operation in step S203, the extraction unit 231 extracts the measured power consumption from the storage unit 220.

In step S206, the power control unit 232 generates the power consumption response information including the extraction result by the extraction unit 231, and transmits the generated power consumption response information to the consumer controller 190. Specifically, the power control unit 232 transmits the power consumption response information including the operation modes 1 to 5, the operation parameters that correspond to the operation modes 1 to 5, and the measured power consumption, to the consumer controller 190. It is noted that the transmission unit 212 configures a transmission unit that transmits the extraction result by the extraction unit 231 to the consumer controller 190.

In step S207, upon determination that the measured power consumption is not stored, the extraction unit 231 extracts the predetermined power consumption from the storage unit 220. Furthermore, at the time of operating in step S204, also upon determination that the power consumption request information including the new operating environment information not stored in the storage unit 220 is received, the extraction unit 231 determines that the measured power consumption is not stored and extracts the predetermined power consumption.

In step S208, the power control unit 232 generates the power consumption response information including the operation modes 1 to 5, the operation parameters that correspond to the operation modes 1 to 5, and the predetermined power consumption, and transmits the generated power consumption response information to the consumer controller 190.

### (5) Operation and Effect

In the above-described embodiment, in the system-side controller 200, the storage unit 220 associates the device identification information, the operation parameters, the operating environment information and the power consumption of the load equipment with one another and stores them. Furthermore, upon receipt of the power consumption request information from the consumer controller 190, the extraction unit 231 extracts the operation mode, the operation parameters, and the power consumption from the storage unit 220, on the basis of the device identification information and the operating environment information included in the power consumption request information. The transmission unit 212 transmits the extracted operation mode, operation parameters, and power consumption to the consumer controller 190.

According to the system-side controller 200, it is possible to transmit the operation parameter and the power consumption of the load equipment to the consumer controller 190, in response to the request by the consumer controller 190, so that the consumer controller 190 is capable of acquiring only the required information from the system-side controller 200 so as to control the operation of the load equipment.

Therefore, according to the system-side controller 200, the consumer controller 190 may suffice to include a function of storing only minimum required information used for controlling the load equipment, and thus, it is possible to understand the consumption power so as to appropriately control the power consumption of the load equipment without enlarging the device scale.

Furthermore, when the measured power consumption is stored as the power consumption, the system-side controller 200 transmits the measured power consumption to the consumer controller 190, and when the measured power consumption is not stored, the system-side controller 200 transmits the predetermined power consumption.

Here, the measured power consumption is power consumption measured, by a consumer controller that is provided with the same load equipment and that is provided in the consumer with the same operating environment, when the load equipment is actually operated. Therefore, the system-side controller 200 is capable of transmitting the measured power consumption having higher accuracy, to the consumer controller 190.

In addition, the system-side controller 200 stores the measured power consumption measured by the consumer controller 190 under the control of the system-side controller 200. That is, the system-side controller 200 uniformly manages the measured power consumption that is measured, and therefore, it is possible to share the measured power consumption measured once with another consumer controller without requiring each of the subordinate consumer controller to measure the power consumption for an unnecessary number of times. Therefore, it is possible to restrain the load at the time of measurement in the consumer controller installed in the entire power control system 1.

Furthermore, in the system-side controller 200, upon receipt of the power consumption request information including the new operating environment information, the new operating environment information is added to the storage unit 220. Therefore, it is possible to enrich the types of the operating environment information stored in the storage unit 220.

### (6) First Modification

A first modification of the present embodiment is described below. In the system-side controller 200 according to the above-described embodiment, when it is determined by the extraction unit 231 that the measured power consumption is not stored in the storage unit 220, the power control unit 232 transmits the power consumption response information including the predetermined power consumption, to the consumer controller 190.

In the system-side controller 200 according to the present modification, when it is determined by the extraction unit 231 that the measured power consumption is not stored in the storage unit 220, the power control unit 232 transmits the instruction information for instructing a measurement report on the measured power consumption, to the consumer controller 190, via the transmission unit 212.

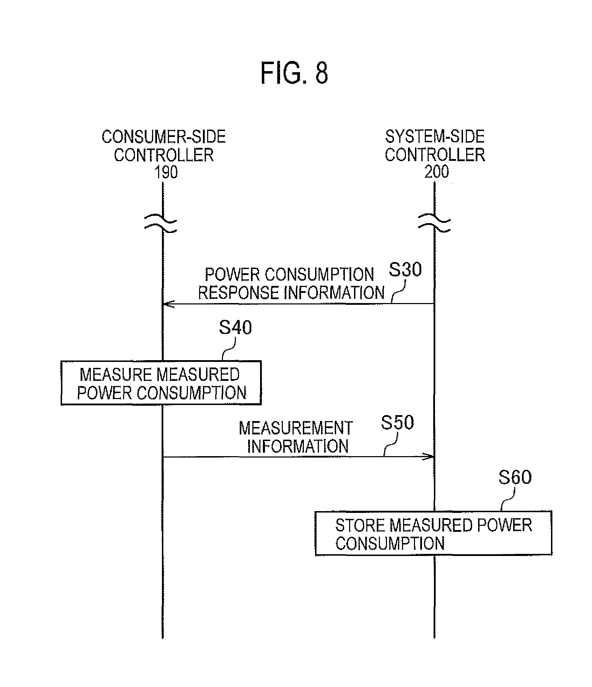

Specifically, a description is provided with reference to Fig. 8. Fig. 8 shows an operation performed when the system-side controller 200 instructs the consumer controller 190 to perform a measurement report on the measured power consumption.

In step S30, in the system-side controller 200, the power control unit 232 generates the power consumption response information including instruction information for instructing measurement of the power consumption of the load equipment and report on a measurement result in addition to the operation modes 1 to 5, the operation parameters corresponding to the operation modes 1 to 5, and the predetermined power consumption, and transmits the generated power consumption response information to the consumer controller 190. It is noted that the device identification information of the load equipment may be included in the power consumption response information.

In step S40, in the consumer controller 190, upon receipt of the power consumption response information, on the basis of the operation parameters included in the power consumption response information, the load equipment is operated and the measured power consumption consumed by the load equipment at the time of the operation is measured.

In step S50, the consumer controller 190 transmits the measurement information including the device identification information, the operation parameters, the operating environment information, and the measured power consumption, to the system-side controller 200.

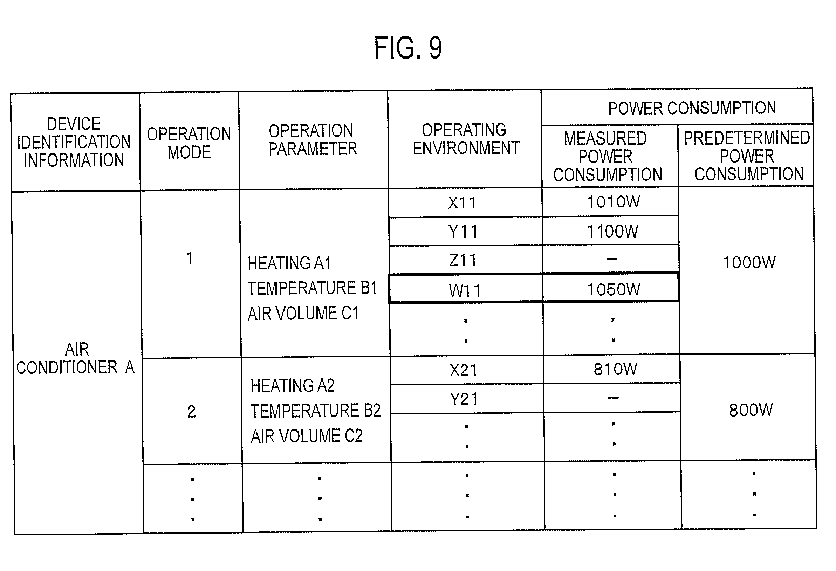

In step S60, upon receipt of the measurement information, the system-side controller 200 associates the device identification information, the operation parameters, the operating environment information, and the measured power consumption with one another, and stores in the storage unit 220. For example, when the measurement information is the device identification information "Air conditioner A", the operation parameter "Heating A1, Temperature B1, Air volume C1", the operating environment information "W11", and the measured power consumption "1050W", these items of information are associated with one another and stored in the system-side controller 200, as shown in Fig. 9.

According to the system-side controller 200 according to the present modification, when the measured power consumption is not stored as the power consumption corresponding to the operating environment information, it is possible to instruct the consumer controller 190 to measure the power consumption of the load equipment so as to acquire the measured power consumption.

Therefore, according to the system-side controller 200, it is possible to allow the storage unit 220 to store the measured power consumption corresponding to various items of operating environment information. Furthermore, as a result, the system-side controller 200 becomes also capable of transmitting the measured power consumption corresponding to various items of operating environment information, to another consumer controller.

It is noted that the system-side controller 200 may not only instruct measurement and report of the power consumption through the power consumption response information to the system-side controller 200, but also may periodically instruct measurement and report of the power consumption to the system-side controller 200. As a result, the system-side controller 200 is capable of continuously acquiring the power consumption of a particular device under a particular environment.

### (7) Second Modification

A second modification of the present embodiment is described below. In the system-side controller 200 according to the above-described embodiment, when the storage unit 220 does not store the measured power consumption, the power control unit 232 transmits the power consumption response information including the predetermined power consumption, to the consumer controller 190.

However, it may be possible to consider a case in which neither the measured power consumption nor the predetermined power consumption is stored in the storage unit 220, and a case in which neither the operation mode nor the operation parameters are stored in the storage unit 220.

In these cases, the power control unit 232 accesses a server administered by a manufacturer of the load equipment indicated by the device identification information included in the power consumption request information received from the consumer controller 190 so as to acquire the information (the operation mode, the operation parameter, and the predetermined power consumption) corresponding to the device identification information via the wide area network 80. The power control unit 232 transmits the power consumption response information including the acquired information (the operation mode, the operation parameter, and the predetermined power consumption), to the consumer controller 190.

Furthermore, when the information (the operation mode, the operation parameter, and the predetermined power consumption) does not exist even in the server administered by the manufacturer, the power control unit 232 sends back the fact that the information does not exit (Unknown) to the consumer controller 190, and requests the consumer controller 190 to measure the measured power consumption.

Alternatively, when the power consumption (the measured power consumption and the predetermined power consumption) corresponding to the device identification information and the operating environment information included in the power consumption request information received from the consumer controller 190 is not stored in the storage unit 220, the extraction unit 231 may extract the power consumption according to a first method or a second method below.

According to the first method, the extraction unit 231 extracts a power consumption corresponding to the operating environment information included in the power consumption request information, from among the power consumptions corresponding to other load equipments determined to be similar to the load equipment indicated by the device identification information included in the power consumption request information. That is, the information about the power consumption of the load equipment under a particular operating environment is supplemented by the information about the power consumption of another load equipment under the particular operating environment.

According to the second method, the extraction unit 231 extracts the power consumption corresponding to another operating environment that is determined to be similar to the operating environment indicated by the operating environment information included in the power consumption request information, from among the power consumptions corresponding to the device identification information included in the power consumption request information. That is, the information about the power consumption of the load equipment under a particular operating environment is supplemented by the information about the power consumption of the load equipment under the other operating environment.

When the power consumption is evaluated according to the first method or the second method, the degree of reliability of the power consumption notified to the consumer controller 190 may be low. For example, the degree of reliability of the power consumption is low when the power consumption is supplemented on the basis of the other load equipment having a low degree of similarity or the other operating environment having a low degree of similarity.

Therefore, at the time of notifying the consumer controller 190 of the power consumption, the power control unit 232 may also notify the consumer controller 190 of the degree of reliability (accuracy) of the power consumption. For example, the information of the degree of reliability (accuracy) may be expressed in the range of 0 to 1; where 1 can be defined as "perfect match with a condition", and 0 can be defined as "no relevant information".

Furthermore, when the power control unit 232 also notifies the consumer controller 190 of the degree of reliability of the power consumption at the time of notifying the consumer controller 190 of the power consumption, then the information of the degree of reliability, which is to be notified, may be defined by the following parameter (α). The parameter (α) is calculated on the basis of the power consumption. The power consumption, for example, includes the measured power consumption described above, the predetermined power consumption, the power consumption evaluated according to the first method, and the power consumption evaluated according to the second method. It is noted that it is possible to define a parameter (α2) based on the power consumption evaluated according to the first method or the second method to be smaller than a parameter (α1) based on the measured power consumption or the predetermined power consumption. In this case, the greater the value of the parameter (α) is, the higher (more accurate) the degree of reliability is.

### (8) Other Embodiments

As described above, the present invention has been described according to the embodiment. However, it must not be understood that the discussions and the drawings constituting a part of this disclosure limit the present invention. From this disclosure, various alternative embodiments, examples and operational techniques are apparent to those skilled in the art.

For example, in the above-described embodiment, it may be possible to share the information stored in the storage unit 220 of the system-side controller 200 with another system-side controller that manages another consumer group.

Furthermore, in the above-described embodiment, the system-side controller 200 may be configured to receive the power consumption request information including the operation parameters, from the consumer controller 190. Furthermore, when the new operation parameter is included in the received power consumption request information, the system-side controller 200 associates the new operation parameter, the device identification information, the operating environment information, and the power consumption with one another, and stores a new record onto the information table of the storage unit 220.

Furthermore, in the above-described embodiment, a case where the consumer controller 190 is HEMS (Home Energy Management System) is described; however, the description is not limited thereto, and the consumer controller 190 may be also applied to various systems in the smart grid technique, such as BEMS (Building and Energy Management System). Thus, it should be understood that the present invention includes various embodiments that are not described herein.

Furthermore, the entire content of Japanese Patent Application No. 2011-090524 (filed on April 14, 2011) is incorporated into the specifications of this application, by reference.

### Industrial Applicability

As described above, a system-side controller and a method according to the present invention are useful in electronics such as the smart grid, with which it is possible to appropriately control a power consumption of a load equipment without enlarging the device scale of a consumer controller, in a power control system that includes the consumer controller that controls power in a consumer.

## Claims

1. In a power control system provided with a consumer controller that controls an operation of a load equipment provided in a consumer, a system-side controller that communicates with the consumer controller, comprising:
a storage unit that associates device identification information for identifying the load equipment, an operation parameter for determining an operating status of the load equipment, operating environment information indicating an operating environment of the load equipment, and a power consumption corresponding to the operating environment of the load equipment with one another and stores them;
a reception unit that receives, from the consumer controller, power consumption request information including the device identification information of the load equipment provided in the consumer and the operating environment information indicating the operating environment of the load equipment;
a control unit that extracts the operation parameter and the power consumption from the storage unit on the basis of the device identification information and the operating environment information included in the power consumption request information; and
a transmission unit that transmits an extraction result by the control unit to the consumer controller.

2. The system-side controller according to claim 1, wherein
in the storage unit, at least one of a predetermined power consumption calculated on the basis of a design value and an actually measured power consumption is stored as the power consumption, and
the control unit
determines, when the power consumption request information is received, whether or not the measured power consumption associated with the operating environment information included in the power consumption request information is stored in the storage unit,
extracts the measured power consumption, upon determination that the measured power consumption is stored, and
extracts the predetermined power consumption, upon determination that the measured power consumption is not stored.

3. The system-side controller according to claim 2, wherein
the control unit
determines, when the reception unit receives power consumption request information including new operating environment information not stored in the storage unit, that the measured power consumption is not stored, and extracts the predetermined power consumption, and
associates the device identification information, the operation parameter, the new operating environment information, and the predetermined power consumption with one another, and stores them in the storage unit.

4. The system-side controller according to claim 2, wherein
the control unit controls the transmission unit, upon determination that the measured power consumption is not stored, such that the transmission unit transmits instruction information for instructing a measurement report on the measured power consumption, to the consumer controller.

5. The system-side controller according to claim 1, wherein
the storage unit stores the operating environment information and the power consumption, for each operation mode associated with operation parameter, for each load equipment provided in the consumer, and
the control unit extracts the operation parameter and the power consumption from the storage unit for each operation mode on the basis of the device identification information and the operating environment information included in the power consumption request information, and controls the transmission unit such that the transmission unit transmits an extraction result to the consumer controller.

6. The system-side controller according to claim 1, wherein
the control unit controls the transmission unit such that the transmission unit periodically transmits instruction information for instructing a measurement report on the measured power consumption, to the consumer controller, so as to periodically update the measured power consumption stored in the storage unit on the basis of the report from the consumer controller.

7. The system-side controller according to claim 1, wherein
when the operation parameter and/or the power consumption associated with the device identification information and the operating environment information included in the power consumption request information is not stored in the storage unit, the control unit acquires the operation parameter and/or the power consumption power consumption from a server via a wide area network.

8. The system-side controller according to claim 1, wherein
when the power consumption associated with the device identification information and the operating environment information included in the power consumption request information is not stored in the storage unit, the control unit extracts a power consumption associated with the operating environment information from among power consumptions associated with another load equipment determined to be similar to the load equipment indicated by the device identification information, and controls the transmission unit such that the transmission unit transmits an extraction result to the consumer controller.

9. The system-side controller according to claim 1, wherein
when the power consumption associated with the device identification information and the operating environment information included in the power consumption request information is not stored in the storage unit, the control unit extracts a power consumption associated with another operating environment determined to be similar to the operating environment indicated by the operating environment information, from among power consumptions associated with the load equipment indicated by the device identification information, and controls the transmission unit such that the transmission unit transmits an extraction results to the consumer controller.

10. The system-side controller according to claim 1, wherein
the control unit transmits information indicating a accuracy of a power consumption included in an extraction result, to the consumer controller, at the time of transmitting the extraction result to the consumer controller.

11. In a power control system provided with a consumer controller that controls an operation of a load equipment provided in a consumer, a method of communicating with the consumer controller, comprising:
a storage step of associating device identification information for identifying the load equipment, an operation parameter for determining an operating status of the load equipment, operating environment information indicating an operating environment of the load equipment, and a power consumption corresponding to the operating environment of the load equipment with one another and storing them;
a reception step of receiving, from the consumer controller, power consumption request information including the device identification information of the load equipment provided in the consumer and the operating environment information indicating the operating environment of the load equipment;
an extraction step of extracting the operation parameter and the power consumption from the stored content in the storage step on the basis of the device identification information and the operating environment information included in the power consumption request information; and
a transmission step of transmitting an extraction result in the extraction step to the consumer controller.
